(19) Europäisches Patentamt
European Patent Office
Office européen des brevets

(11) Numéro de publication : **0 342 071 B1**

(12) # FASCICULE DE BREVET EUROPEEN

(45) Date de publication du fascicule du brevet : **26.02.92 Bulletin 92/09**

(51) Int. Cl.$^5$ : **E04B 1/80,** E04C 2/16, D21J 1/20, C08B 30/08, E04B 1/88, E04B 1/90

(21) Numéro de dépôt : **89401036.2**

(22) Date de dépôt : **14.04.89**

(54) **Procédé de fabrication de panneaux isolants.**

(30) Priorité : **27.04.88 FR 8805619**

(43) Date de publication de la demande : **15.11.89 Bulletin 89/46**

(45) Mention de la délivrance du brevet : **26.02.92 Bulletin 92/09**

(84) Etats contractants désignés : **AT BE CH DE ES FR GB GR IT LI LU NL SE**

(56) Documents cités :
**FR-A- 1 504 973**
**FR-A- 2 036 685**
**FR-A- 2 226 361**

(73) Titulaire : **ATOCHEM**
**4 & 8, Cours Michelet La Défense 10**
**F-92800 Puteaux (FR)**

(72) Inventeur : **Bourson, Lucien**
**15 rue Raspail**
**F-92270 Bois-Colombes (FR)**
Inventeur : **Bonnaud, Yves**
**2 place de l'Auditoire**
**F-95160 Montmorency (FR)**
Inventeur : **Guillaume, Jean-Paul**
**3 allée Pablo Picasso Le Plessis Bouchard**
**F-95130 Franconville (FR)**

EP 0 342 071 B1

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente invention concerne un procédé de fabrication de panneaux isolants.

Ces panneaux sont constitués d'un mélange de laine de roche ou de laine de verre, d'argile, de vieux papiers et d'amidon et sont utiles pour isoler thermiquement et phoniquement les constructions. On peut les peindre ou y coller un revêtement décoratif, ils peuvent être utilisés comme faux plafonds.

La demande de brevet DE-A-2 617 601 décrit la fabrication de panneaux isolants comprenant des tissus de fibres de verre. L'inconvénient est d'avoir à manipuler des solides lors de la mise en forme du panneau. L'invention concerne plus particulièrement les procédés dans lesquels le panneau est formé par filtration puis séchage d'une suspension.

Un procédé de fabrication de ces panneaux consiste à mettre en suspension dans l'eau des fibres de laine de verre ou de laine de roche, de l'argile ou une autre charge minérale, des vieux papiers ou des vieux cartons broyés et de l'amidon. Puis on filtre cette suspension sur une toile et on obtient une sorte de plaque humide de quelques centimètres d'épaisseur qu'on sèche dans un tunnel chauffant. On obtient ainsi des plaques rigides utiles comme matériau de construction.

Le brevet FR-A-1504 973 concerne des panneaux obtenus par un tel procédé et constitués de fibres de laine minérale, d'argile, de fibres de papier journal, d'amidon et de résine de bois thermoplastique. Ces panneaux sont présentés comme ayant une bonne résistance à la flexion en atmosphère humide.

Un des buts de l'amidon est de donner une cohésion et une rigidité au panneau. L'inconvénient d'un tel procédé est que l'amidon n'est qu'en partie retenu dans la plaque humide, l'autre partie sortant en suspension avec l'eau de filtration sous la toile. On a maintenant trouvé un nouveau procédé qui permet de mieux fixer l'amidon dans la plaque humide à la filtration et d'avoir des eaux sous toile de filtration qui contiennent très peu d'amidon et en général très peu de matières en suspension.

Le procédé selon l'invention est caractérisé en ce que dans une suspension contenant :

- au moins un matériau fibreux,
- une charge minérale
- de l'amidon,

on ajoute avant la filtration un polychlorure métallique.

On réalise par tout moyen connu une suspension dans l'eau des produits ci-dessus à l'état plus ou moins divisé puis on ajoute dans cette suspension un polychlorure métallique et on filtre cette suspension par exemple sur un filtre continu à bande de telle sorte qu'on obtienne une plaque humide de quelques centimètres d'épaisseur (le "gateau" de filtration) qu'on peut sécher ensuite.

On peut utiliser n'importe quel matériau fibreux, par exemple des fibres végétales, des fibres de verre, ou des déchets de fibres textiles. Cependant on préfère la laine de roche ou la laine de verre.

Comme charge minérale on peut choisir par exemple de l'argile sous toutes ses formes, du kaolin ou du carbonate de calcium. Bien sûr on peut utiliser un mélange de deux ou plusieurs de ces charges minérales. On utilise de préférence de l'argile ou un produit constitué essentiellement d'argile.

On peut utiliser toutes sortes d'amidon, tel que, par exemple, l'amidon de maïs naturel dit "non modifié", ou de l'amidon modifié tel que l'amidon anionique ou cationique.

Tous ces composants de la suspension peuvent être introduits à l'état sec ou en suspension aqueuse, en une ou plusieurs fois et dans n'importe quel ordre.

Le polychlorure métallique est un produit de formule :

$$\left[ M_n \; (OH)_m \; Cl_{3n-m} \right]_z$$

dans laquelle M est un métal trivalent, m et n sont des entiers positifs, 3 n - m est > 0 et z est supérieur ou égal à 1. Ce produit est connu et est déjà utilisé comme floculant dans le traitement des eaux.

On préfère le produit dans lequel M représente l'Aluminium.

On peut aussi utiliser un produit de formule :

$$M_n \, (OH)_m \, X_{3n-m}$$

dans laquelle M est un métal qui peut être un métal tri- ou polyvalent, X est un anion qui peut être Cl, $NO_3$ ou $CH_3COO$, 3n est supérieur à m avec une basicité ( m/3n x 100) comprise entre 30 et 83 % environ, un anion polyvalent (appelé Y) ayant été chimiquement introduit dans ledit sel basique, la quantité de l'anion Y étant telle que le rapport Y/M est de 0,015-0,4.

Ce produit est décrit dans le brevet français 2 036 685. On préfère utiliser le produit dans lequel M est l'aluminium, X le chlore et Y un sulfate. On peut aussi utiliser le produit de formule :

$$Al_m (OH)_n X_{3m-n-2k} (SO_4)_k$$

dans laquelle X représente Cl ou $NO_3$, k, m et n sont respectivement des nombres positifs, $3m > n + 2k$, la basicité $\frac{(n \times 100)}{3m}$ est comprise entre 30 et 70 % et k/m est compris entre 0,01 et 0,3.

On le fabrique par un procédé qui consiste à mélanger un sulfate soluble dans l'eau ou une solution contenant des ions $SO_4$, une solution contenant Al et X et une solution d'aluminate alcalin à une température inférieure à 40°C de façon à produire un gel, puis à maintenir la totalité du mélange entre 50 et 80°C de façon à permettre au gel de se dissoudre et obtenir ainsi une solution de sel basique d'aluminium.

Ce produit est décrit dans le brevet français 2 226 361.

On peut aussi utiliser le produit de formule $Al_2 (OH)_x Cl_y$ dans lequel x est compris entre 1 et 3,5 et y entre 5 et 2,5 ; ce produit est décrit dans le brevet US 3 909 439.

On peut encore utiliser des polychlorosulfates basiques d'Aluminium répondant à la formule générale :

$$\left[ Al_n (OH)_{3n-m-2p} Cl_m (SO_4)_p \right]_z$$

dans laquelle :

. $\frac{3n-m-2p}{3n}$ est compris entre 0,4 et 0,7

. p est compris entre 0,04 n et 0,25 n

. $\frac{m}{p}$ est compris entre 8 et 35

. z est supérieur ou égal à 1

Ce produit peut être préparé par action du chlorure basique d'Aluminium sur du sulfate basique d'Aluminium.

Ce procédé est décrit dans le brevet français 2 534 897.

Il est aussi possible d'utiliser les polychlorosulfates basiques d'Aluminium décrits dans la demande de brevet européen EP 218487 :

$$Al_nOH_m (SO_4)_k Cl_{3n-m-2k}$$

dans laquelle la basicité ou le rapport $\frac{m}{3n} \times 100$ est compris entre 40 % environ et 65 % environ et en ce qu'il présente un rapport équivalent Al/équivalent Cl compris entre 2,8 et 5, une masse moléculaire apparente MA mesurée par diffusion de lumière classique et des diamètrès hydrodynamiques apparents $\phi Z$ et $\phi W$ mesurés par diffusion quasi-élastique de la lumière de valeurs suivantes :

| | | |
|---|---|---|
| MA | = | 7 000 - 35 000 |
| $\phi Z$ (Å) | = | 350 - 2 500 |
| $\phi W$ (Å) | = | 200 - 1 200 |

ou tels que

| | | |
|---|---|---|
| MW | = | 10 000 - 300 000 |
| $\phi Z$ (Å) | = | 90 - 450 |
| $\phi W$ (Å) | = | 50 - 300 |

ou encore le polychlorosulfate d'aluminium basique comprenant le produit de formule générale :

$$Al_n OH_m (SO_4)_k Cl_{3n-m-2k}$$

qui peut être obtenu notamment par un procédé du type comprenant une étape de préparation d'une bouillie de chlorure de calcium et de carbonate de calcium (bouille chlorocarbonatée), une étape de mise en contact

de la bouillie chlorocarbonatée avec du sulfate d'aluminium, puis une étape de séparation du mélange réactionnel ainsi obtenu permettant de séparer un gâteau de sulfate de calcium et un filtrat contenant le chlorosulfate d'aluminium basique, les quantités de bouillie chlorocarbonatée et de sulfate d'aluminium étant telles que l'on ait pour le chlorosulfate d'aluminium basique obtenu un rapport $\frac{m}{3n}$ x 100 compris entre 40 % environ et 65 % environ et un rapport équivalent Al/équivalent Cl compris entre 2,8 et 5.

On peut encore utiliser des polychlorosulfates basiques d'aluminium comprenant des produits ayant un certain degré de polymérisation et de composition représentée par l'expression :

$$Al_n\,Cl_m(OH)_{3n+2k-m-2p}(SO_4)_p\,X_k$$

dans laquelle :

. X représente un alcalino-terreux, de préférence le calcium

. n, m, p et k représente les concentrations molaires (mol/l) des composants en solution

. moins de 20 % des ions $SO_4^{2-}$ sont précipitables par la réaction avec le chlorure de baryum à température ambiante, dont la basicité : $\frac{3n + 2k - m - 2p}{3n}$ X 100 est comprise entre 45 et 70 %.

Ces produits peuvent être fabriqués selon un procédé qui consiste à préparer une solution aqueuse contenant l'ion aluminium, l'ion chlorure et l'ion sulfate, puis à mettre en contact cette solution avec un composé alcalino-terreux, et enfin à éliminer le sulfate alcalino-terreux formé.

On peut utiliser un ou plusieurs de ces sels métalliques.

Il est préférable d'ajouter le polychlorure métallique dans la suspension juste avant la filtration. On peut aussi l'ajouter en plusieurs fois.

Bien que la suspension puisse contenir le matériau fibreux, la charge minérale et l'amidon en proportions quelconques, avantageusement le matériau fibreux représente en poids entre 50 et 80 % des matières sèches de la suspension.

Quant à la charge minérale, on l'introduit en proportion de 10 à 20 % par rapport au poids des matières sèches de la suspension.

Habituellement il suffit de 5 à 10 % en poids d'amidon.

La quantité de polychlorure métallique peut être quelconque mais il est suffisant d'introduire une quantité inférieure à 1 %, et de préférence comprise entre 0,1 et 0,6 %. en poids des matières sèches de la suspension, la somme de ces proportions faisant 100 %.

On peut aussi ajouter dans cette suspension un matériau à base de cellulose tel que des déchets de bois, des copeaux, de la sciure de bois, des vieux papiers ou des cartons.

On préfère ajouter dans cette suspension de vieux papiers ou des vieux cartons. Avantageusement ces papiers et cartons sont broyés ou déchiquetés avant d'être mis dans la suspension, on peut aussi les mettre partiellement broyés dans la suspension et broyer la suspension.

Avantageusement la quantité de papiers ou de cartons ou d'un mélange de papiers et de cartons ne dépasse pas 10 % en poids des matières sèches de la suspension et est de préférence comprise entre 2 et 7 %.

On ne sortirait pas du cadre de l'invention en ajoutant dans la suspension des matériaux expansés tels que de la vermiculite ou de la perlite. On peut aussi ajouter des produits hydrocarbonés tels que du bitume ou des goudrons qui peuvent être éventuellement dispersés dans la suspension par des tensio-actifs. Ces matériaux expansés s'utilisent en substitution partielle du matériau fibreux. Avantageusement jusqu'à 30 % en poids du matériau fibreux peut être remplacé par de la perlite ou de la vermiculite.

On ne sortirait pas du cadre de l'invention en associant le polychlorure métallique avec un ou plusieurs agents floculants synthétiques.

C'est par exemple les poly(alkylène polyamines), les poly(hydroxyalkylène polyamines), les polyacrylamides.

On ne sortirait pas du cadre de l'invention en ajoutant dans la suspension des colorants, des ignifugeants et en général tous produits utilisés pour faire ce genre de panneaux.

Les exemples suivants illustrent l'invention sans la limiter.

## EXEMPLE 1

On réalise une suspension aqueuse contenant :

| | | |
|---|---|---|
| laine de roche | : | 59 % |
| argile | : | 13 % |
| amidon | : | 7 % |
| vieux papiers | : | 4 % |
| déchets des panneaux précédents (cassés) | : | 17 % |

Ces pourcentages sont en poids des matières sèches de la suspension. Cette suspension est une solution aqueuse contenant entre 25 et 30 g/l de matières sèches.

On ajoute dans la suspension avant filtration un polychlorosulfate basique d'aluminium de formule tel que décrit dans FR 2.036.685, dans lequel M est l'aluminium, X le chlore, la basicité est 50 % ± 5, et l'anion Y est $SO_4$, tel que Y/M = 0,16 en proportion de 0,5 % par rapport à la composition fibreuse sur une machine du type machine à papier. On obtient par filtration un panneau humide d'épaisseur 15 mm qu'on sèche en 2 heures dans un tunnel à 115°C.

Le classement au feu des panneaux obtenus selon les normes françaises CSTB 92501 et 92510 est MO.

La teneur en matières en suspension (MES) des eaux recueillies sous la toile de filtration est de 200 mg/l.

**EXEMPLE 2** (Comparatif)

En opérant comme dans l'exemple 1 mais en utilisant un floculant type polyacrylamide anionique sans sel d'aluminium au lieu du sel d'aluminium précédent, on obtient les mêmes panneaux, la teneur en MES des eaux sous la toile est de 3400 mg/l.

**EXEMPLE 3**

On opère comme dans l'exemple 1 mais en remplaçant 25 % de la laine de roche par de la perlite. On obtient les mêmes résultats.

## Revendications

1. Procédé de fabrication d'un panneau isolant par filtration d'une suspension contenant :
– au moins un matériau fibreux,
– une charge minérale,
– de l'amidon,
et suivie d'un séchage caractérisé en ce que dans ladite suspension on ajoute avant la filtration un polychlorure métallique.

2. Procédé selon la revendication 1 caractérisé en ce que le matériau fibreux est choisi parmi la laine de verre et la laine de roche.

3. Procédé selon la revendication 1 ou 2 caractérisé en ce que la charge minérale est constituée essentiellement d'argile.

4. Procédé selon l'une des revendications 1 à 3 caractérisé en ce que la suspension comprend aussi un matériau à base de cellulose.

5. Procédé selon l'une des revendications 1 à 4 caractérisé en ce que le polychlorure est un polychlorosulfate basique d'aluminium.

## Claims

1. Process for the manufacture of an insulating panel by filtering a suspension containing:
– at least one fibrous material,
– an inorganic filler,
– starch,
and followed by a drying operation, characterised in that a metal polychloride is added to the said suspension before the filtering.

2. Process according to Claim 1, characterised in that the fibrous material is chosen from glass wool and

rock wool.

3. Process according to Claim 1 or 2, characterised in that the inorganic filler consists essentially of clay.

4. Process according to one of Claims 1 to 3, characterised in that the suspension also comprises a cellulose-based material.

5. Process according to one of Claims 1 to 4, characterised in that the polychloride is a basic aluminium polychlorosulphate.

**Patentansprüche**

1. Verfahren zur Herstellung einer Isolierplatte durch Filtrieren einer Suspension, die
– mindestens ein Fasermaterial,
– mindestens einen mineralischen Füllstoff und
– Stärke enthält,
und anschließendes Trocknen, dadurch gekennzeichnet, daß man der Suspension vor dem Filtrieren ein Metallpolychlorid zusetzt.

2. Verfahren nach Anspruch 1, dadurch gekennzeichnet, daß das Fasermaterial unter Glaswolle und Gesteinswolle ausgewählt wird.

3. Verfahren nach Anspruch 1 oder 2, dadurch gekennzeichnet, daß der mineralische Füllstoff im wesentlichen aus Ton besteht.

4. Verfahren nach einem der Ansprüche 1 bis 3, dadurch gekennzeichnet, daß die Suspension auch ein Material auf Basis von Cellulose enthält.

5. Verfahren nach einem der Ansprüche 1 bis 4, dadurch gekennzeichnet, daß das Polychlorid ein basisches Aluminiumpolychlorsulfat ist.